(19) Europäisches Patentamt
European Patent Office
Office européen des brevets

(11) **EP 2 937 917 B1**

(12) **EUROPEAN PATENT SPECIFICATION**

(45) Date of publication and mention
of the grant of the patent:
**12.09.2018 Bulletin 2018/37**

(51) Int Cl.:
***H01M 4/525*** *(2010.01)*       ***H01M 4/505*** *(2010.01)*
***C01G 53/00*** *(2006.01)*

(21) Application number: **13865386.0**

(22) Date of filing: **09.12.2013**

(86) International application number:
**PCT/JP2013/007223**

(87) International publication number:
**WO 2014/097569 (26.06.2014 Gazette 2014/26)**

(54) **POSITIVE ELECTRODE MATERIAL FOR LITHIUM SECONDARY BATTERIES**

POSITIVELEKTRODENMATERIAL FÜR LITHIUMSEKUNDÄRBATTERIEN

MATÉRIAU D'ÉLECTRODE POSITIVE POUR DES BATTERIES RECHARGEABLES AU LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2012 JP 2012280170**

(43) Date of publication of application:
**28.10.2015 Bulletin 2015/44**

(73) Proprietor: **JFE Mineral Company, Ltd.
Minato-ku
Tokyo 105-0014 (JP)**

(72) Inventors:
• **HAMANO, Yoshiaki
  Tokyo 105-0014 (JP)**
• **IWASAKI, Yosuke
  Tokyo 105-0014 (JP)**

(74) Representative: **Hoffmann Eitle
Patent- und Rechtsanwälte PartmbB
Arabellastraße 30
81925 München (DE)**

(56) References cited:
JP-A- 2004 200 160    JP-A- 2006 054 159
JP-A- 2006 310 181    JP-A- 2011 023 335
JP-A- 2012 174 569

EP 2 937 917 B1

**Description**

Technical Field

The present invention relates to a new positive electrode material for a lithium secondary battery which is composed of lithium containing complex oxides and to a method for manufacturing the material.

Background Art

Nowadays, there is a growing expectation for secondary batteries which are small and light and which have a high energy density, in particular for lithium secondary batteries, due to portable or cordless devices being used more than ever. Known examples of a positive electrode material for lithium secondary batteries include complex oxides of lithium and transition metals such as $LiCoO_2$, $LiNiO_2$, $LiNi_{0.8}Co_{0.2}O_2$, $LiMn_2O_4$, and $LiMnO_2$. It is possible to achieve a comparatively high capacity density of 180 to 200 mAh/g by using a lithium secondary battery whose positive electrode material is composed of a complex oxide having a layered rock salt structure with a solid solution of cobalt and nickel such as $LiNi_{0.8}Co_{0.2}O_2$. In addition, the lithium secondary battery has good reversibility in a high voltage range of 2.5 to 4.5 V.

Recently, in particular, lithium-nickel-cobalt complex oxides represented by $LiNi_{0.8}Co_{0.2}O_2$ have been started to be used as materials which can achieve a high capacity. The commercialization of a lithium secondary battery having a high voltage and high energy density is being progressed by using such materials as positive electrode materials and by using, for example, carbon materials, which can occlude and release lithium, as negative electrode materials.

The positive electrode material is the material that plays the most important role in the battery performance and safety of a lithium secondary battery. Nowadays, complex metal oxides such as $LiCoO_2$, $LiMn_2O_9$, $LiNiO_2$, $LiNi_{1-x}Co_xO_2$, and $LiMnO_2$ are being investigated.

Among such positive electrode materials, Mn-containing positive electrode materials such as $LiMn_2O_4$ and $LiMnO_2$ are easy to be synthesized and comparatively inexpensive, but they are disadvantageous in that they can only achieve a small discharge capacity. Although Co-containing positive electrode materials such as $LiCoO_2$ achieve good electrical conductivity, high battery voltage, and excellent electrode performance, there is a problem in that Co metal, which is a main raw material, is rare and expensive. Ni-containing positive electrode materials such as $LiNiO_2$ use Ni metal, which is comparatively inexpensive among the positive electrode materials described above, as a main raw material and are excellent in terms of practical discharge capacity when used in a battery, although the theoretical discharge capacity of the Ni-containing positive electrode materials is not much different from that of $LiCoO_2$. However, the Ni-containing positive electrode materials are disadvantageous in that they are difficult to be synthesized.

Patent Literature 1 describes an electrode material composed of $Li_aM_bO_2$, where $M=A_zA'_{z'}M'_{1-z-z'}$, where M' represents Mn, Ni, and Co, where A represents metals selected from among Al, Mg, Ti, and Cr, and where A' represents chemical elements selected from among F, Cl, S, Zr, Ba, Y, Ca, B, Be, Sn, Sb, Na, and Zn (Claim 3). This electrode material is powder having a particle size distribution, and a technique in which the composition M is varied in accordance with the particle size is disclosed (Claim 5).

Similar materials are known from Patent Literature 2.

Various positive electrode materials having various chemical compositions have been investigated in conventional techniques. However, in the case of lithium secondary batteries using the positive electrode materials according to conventional techniques, further improvement is required in terms of discharge capacity, charge-discharge efficiency, rate performance, and safety. In particular, in the case where a positive electrode material is a composition which undergoes a large change in mass with time in atmospheric air, there is a problem in that the change has an influence on the product quality of a lithium secondary battery which is manufactured using the material.

Citation List

Patent Literature

PTL 1: Japanese Unexamined Patent Application Publication (Translation of PCT Application) No. 2007-517368

PTL 2: JP 2012-174569 Summary of Invention

Technical Problem

The present invention provides a new material (hereinafter, referred to positive electrode material) used as a positive electrode material for a lithium secondary battery which achieve high safety, high capacity, and excellent rate performance, which does not undergo deterioration, and which has a Li-Ni-Co-O-containing, Li-Ni-Mn-O-containing, or Li-Ni-Mn-Co-O-containing chemical composition.

Solution to Problem

In order to solve the problems described above, the present invention provides a positive electrode material for a lithium secondary battery which is composed of a complex oxide composition comprising Li-Ni-Co(or Mn)-O-containing material and two or more other chemical elements, a method for manufacturing the material, and a lithium secondary battery which is manufactured using this new material.

Advantageous Effects of Invention

The positive electrode material for a lithium secondary battery according to the present invention is a well-balanced, and excellent positive electrode material having high safety, high capacity, excellent rate performance, and stable in atmospheric air.

Description of Embodiments

The present invention will be described hereafter.

[Positive electrode material for lithium secondary battery]

The positive electrode material according to the present invention is defined in claim 1 and is a complex oxide whose overall composition is expressed by

$$Li_aNi_bM_cN_dL_eO_x,$$

where

M: one or two chemical elements selected from Mn and Co,
N: one, two, or more chemical elements selected from the group consisting of Mg, Al, Ti, Cr, and Fe,
L: one, two, or more chemical elements selected from the group consisting of B, C, Na, Si, P, S, K, Ca, and Ba, where

$a/(b+c+d)$: 0.80 to 1.30,
$b/(b+c+d)$: 0.30 to 0.95,
$c/(b+c+d)$: 0.05 to 0.60,
$d/(b+c+d)$: 0.005 to 0.10,
$e/(b+c+d)$: 0.0005 to 0.010,

$b+c+d=1$, and
$x$: 1.5 to 2.5,
and where Li: lithium, Ni: nickel, Mn: manganese, Co: cobalt, Mg: magnesium, Al: aluminum, Ti: titanium, Cr: chromium, Fe: iron, B: boron, C: carbon, Na: sodium, Si: silicon, P: phosphorus, S: sulfur, K: potassium, Ca: calcium, Ba: barium,
and O: oxygen.

The chemical composition described above is expressed in terms of mole number under the assumption that the total mole number of Ni, M, and N is 1 mole (that is, $b+c+d=1$).
The Li content is set to be 0.80 to 1.30 moles. In the case where the Li content is low, since there is an increase in the amount of lithium deficiency in a crystal structure, there is a decrease in battery capacity when such a material is used for a positive electrode of a lithium secondary battery. In the case where the Li content is excessively high, the slurry becomes gelled as a result of forming hydrates and carbonates such as lithium hydroxide and lithium carbonate when an electrode is manufactured, and therefore, the Li content is set to be 0.80 to 1.30 moles, or preferably 0.85 to 1.20 moles.

The Ni content is set to be 0.30 to 0.95 moles. There is a decrease in battery capacity in the case where the Ni content is excessively low, and there is a decrease in stability in the case where the Ni content is excessively high. It is preferable that the Ni content be 0.50 to 0.95 moles, or more preferably 0.60 to 0.95 moles.

Mn and Co, which are M elements, increase thermal stability, but, since there is a decrease in discharge capacity in the case where the M content is excessively high, the M content is set to be 0.05 to 0.60 moles, or preferably 0.05 to 0.40 moles. M elements and N elements may also be used as positive electrode raw materials in the form of a co-precipitated hydrates which is formed by combining the M elements and the N elements with Ni in advance.

The content of one, two, or more chemical elements selected from the group consisting of Mg, Al, Ti, Cr, and Fe, which are N elements, is set to be 0.005 to 0.10 moles, or preferably 0.005 to 0.07 moles. In the case where the N element content is within this range, since there is an appropriate decrease in crystallinity, there is an advantage in that Li ions are diffused in good condition. In the case where the N element content is more than 0.10 moles, there is a decrease in battery capacity.

In the case where one, two, or more chemical elements selected from the group consisting of B, C, Na, Si, P, S, K, Ca, and Ba, which are L elements, are added, the obtained positive electrode material undergoes a small temporal change in mass in atmospheric air at a normal temperature. It is preferable that C, S, and Ba be used as the L elements. The L elements are added in an amount of 0.0005 to 0.010 moles in order to increase thermal stability. In the case where the L content is excessively low, it is difficult to achieve appropriate thermal stability for the positive electrode of the manufactured secondary battery. In addition, in the case where the L content is more than 0.010 moles, there is a significant decrease in capacity. It is preferable that the L content be 0.001 to 0.008 moles.

The positive electrode material for a lithium secondary battery according to the present invention is characterized in that one, two, or more chemical elements selected from the group consisting of Mg, Al, Ti, Cr, and Fe, which are referred to as the N elements, and one, two, or more chemical elements selected from the group consisting of B, C, Na, Si, P, S, K, Ca, and Ba, which are referred to as the L elements are added to an oxide composition basically containing Li, Ni, Mn and/or Co. Although the functional effects of adding the N elements and the L elements are not necessary clear, it is preferable that the N elements be added, because there is a particularly significant effect for achieving high-rate discharge performance. However, there is a case where the performance balance or safety of a battery decreases depending on the combination of the chemical elements and content ratios among them, and, in such a case, there is a case where an increase in discharge performance is not achieved even though the N elements are added. Therefore, it is effective to combine the additive of N elements and the L elements.

It is considered that, since there is an appropriate decrease in the crystallinity of a positive electrode material by adding chemical elements in the N element group, some influence on a Li ion transfer pathway being induced, there is an increase in Li ion conductivity. It is considered that the chemical elements in the L element group are effective for fixing excessive Li and for preventing Li deficiency in the crystals of a positive electrode material by influencing the combined state of main chemical elements in the crystal system of the positive electrode material, and that, as a result, the deterioration of the positive electrode material in air is prevented by decreasing the amount of change in mass with time in atmospheric air at a normal temperature.

The positive electrode material for a lithium secondary battery according to the present invention is characterized in that a complex oxide is formed by adding small amounts of N elements in combination with L elements in amounts smaller than that of the N elements when some amount of Ni is replaced by Co and/or Mn. In the present invention, Co, Mn, and Ba contribute to high safety for a lithium secondary battery. It is considered that Al and Mg are effective for increasing cycle performance in the case where Al and Mg are added to the system of the present invention, and that Al, Ti, Cr, and Fe are effective for increasing rate performance.

It is preferable that the positive electrode material for a lithium secondary battery according to the present invention undergo a change in mass of 0.60 mass% or less, more preferably 0.50 mass% or less, or further more preferably 0.45 mass% or less, after having been exposed to atmospheric air having a temperature of 25°C and a humidity of 60% for 240 hours. A change in mass is determined by difference between a mass before the exposure and a mass after the exposure to atmospheric air controlled to have a temperature of $25 \pm 3°C$ and a humidity of $60 \pm 5\%$ for 240 hours.

Generally, it is said that a nickel-containing positive electrode material for a lithium secondary battery tends to absorb water and carbon dioxide. In the case where moisture in the air is absorbed to the material, lithium hydrates is formed. The formed lithium hydrates absorbs carbon dioxide, and then lithium hydrogen carbonate and lithium carbonate are formed.

In the case where the positive electrode material, composed of a nickel-containing positive electrode material for a lithium secondary battery, absorbs moisture, since the hydrolysis of $LiPF_6$, which is a generally used electrolytic salt, occurs, acids such as hydrofluoric acid and phosphoric acid are formed. The formed acids decompose some portions of the constituent materials of the battery so as to emit various gasses. Therefore, due to the emitted gasses, there may be a battery swelling and a decrease in safety.

In the case where a change in mass is 0.60 mass% or less after the material has been exposed to atmospheric air having a constant temperature of 25°C and a constant humidity of 60% for 240 hours, it is possible to inhibit the occurrence of gelatification of a slurry for a positive electrode and to inhibit the occurrence of the swelling of the battery which are due to the phenomenon described above. In a system of the present invention, it is possible to decrease the rate of change in mass by adding at least one of Ba, Ca, K, Na, S, C, Si, P, and B, which are chemical elements in the L element group.

It is preferable that primary particles having an average particle diameter of 0.1 $\mu$m or more be aggregated to form secondary particles in the positive electrode material for a lithium secondary battery according to the present invention. It is preferable for the positive electrode material that primary particles having an average particle diameter of 0.1 $\mu$m or more be coagulated to form secondary particles, because there is a decrease in thermal stability in the case where particles having a diameter of less than 0.1 $\mu$m are present. In the case of the positive electrode material according to the present invention, secondary particles, which are formed by polyhedral primary particles being aggregated in a substantially spherical shape, are observed using an electron microscope at a magnification of 3000 times.

The present invention provides a positive electrode material for a lithium secondary battery having as satisfactory a battery performance as possible by increasing the capacity per unit volume of a positive electrode as a result of increasing the density of the whole combined agent used for the positive electrode.

In order to realize that, since it is effective to increase the filling rate of the particles of a positive electrode material, it is preferable that the particles have an appropriate particle size distribution.

In the present invention, in the case where the overall composition of a complex oxide is expressed by $Li_aNi_b-M_cN_dL_eO_x$, where

M: one or two chemical elements selected from Mn and Co,
N: one, two, or more chemical elements selected from the group consisting of Mg, Al, Ti, Cr, and Fe,
L: one, two, or more chemical elements selected from the group consisting of B, C, Na, Si, P, S, K, Ca, and Ba, and where

a/(b+c+d): 0.80 to 1.30,
b/(b+c+d): 0.30 to 0.95,
c/(b+c+d): 0.05 to 0.60,
d/(b+c+d): 0.005 to 0.10,
e/(b+c+d): 0.0005 to 0.010,

b+c+d=1, and
x: 1.5 to 2.5, in the case where the average particle diameter of primary particles of the positive electrode material is 0.1 $\mu$m or more, in the case where the primary particles are aggregated to form secondary particles, and in the case where the secondary particles have a comparatively wide particle size distribution, the filling rate of the particles is high. It is possible to determine the filling rate of the particles by pressing powder to produce a pellet, by determining the density of the pellet, and by defining the filling rate as the determined press density. Although there is no particular limitation on the upper limit of the average particle diameter of the primary particles, the upper limit is practically set to be 5 $\mu$m or less.

The positive electrode material for a lithium secondary battery according to the present invention has a density of 3.40 g/cc to 4.50 g/cc in the compacted state with a load of 95.5 MPa. Although it is preferable that the upper limit of the density be as high as possible, it is not practical that the density be more than 4.50 g/cc. In the case where the press density is within this range, there is an increase in the capacity per unit volume of the electrode.

The density of a compacted body, which is also called press density, pressure density, or pellet density (in a tablet form), indicates the properties of the product better than tapped density in the case of a positive electrode material for a lithium secondary battery. In the case of the positive electrode material according to the present invention, when the press density is compared with the tap density, there is a case where two products respectively having high and low tapped density conversely have low and high press density. This is thought to be because press density indicates comprehensive properties including a surface state and a particle size distribution. It is considered that, in a system of the present invention, there is an increase in press density in the case where Mg, Ba, Ca, K, and Na are added and that there is a supression in the rate of increase in mass in the case where Ba, Ca, K, Na, S, C, Si, P, and B are added.

In the case of the positive electrode material for a lithium secondary battery according to the present invention, the particle size distribution of the secondary particles can be prepared so that press density is high. In the case where a positive electrode material having high press density is used, since there is an increase in the electrode density of a positive electrode, there is an increase in discharge capacity per unit volume. In the case where there is an increase in the ratio of secondary particles having a particle diameter less than 3 $\mu$m, there is a decrease in the coating performance of an electrode. Therefore, it is preferable that the average particle diameter of secondary particles be 3 $\mu$m or more, because excellent coating performance of an electrode is achieved.

A particle size distribution is determined by obtaining the distribution in the whole particle size range using a laser diffraction-scattering-type measuring method. "$D_{10}$, $D_{90}$" respectively refer to particle diameters corresponding to the integrated values of 10% and 90% in a particle size distribution based on number of particles, and these are determined using a laser diffraction-scattering-type measuring method. $D_{90}$-$D_{10}$ is 5.0 $\mu$m or more in the case of the positive electrode material according to the present invention. In the case where $D_{90}$-$D_{10}$ is within this range, since there is an increase in press density, there is an increase in battery capacity obtained due to an increase in the capacity per unit volume of the positive electrode material. It is further more preferable that $D_{90}$-$D_{10}$ be 7.0 $\mu$m or more and 20.0 $\mu$m or less.

Examples of a method for appropriately preparing the particle diameter distribution include one in which the particle diameter range is appropriately controlled before baking is performed and one in which the particle diameter distribution is controlled by crushing a sintered material as needed and by sorting the powder particles using, for example, a filter.

In the case where the press density of a positive electrode material is high, there is an increase in the capacity per unit volume of a positive electrode, which contributes to an increase in battery capacity. However, there is a case where the density cannot be increased, because the electrode brittleness, or spalling of a positive electrode material, or the like occurs in a rolling process depending on the particle diameter and kind of the positive electrode material used. If necessary, two or more of powders having different average particle diameters may be manufactured using different manufacturing conditions and these powders may be appropriately mixed together. A positive electrode material having high press density can be obtained by adjusting a baking temperature and crushing conditions among manufacturing conditions.

[Method for manufacturing positive electrode material for lithium secondary battery]

The method for manufacturing a positive electrode material according to the present invention will be described hereafter, but the method is not limited to the methods described below.

Examples of the raw materials to be used in manufacturing of a complex oxide, which is a positive electrode material according to the present invention, include oxides and materials which become oxides by a baking reaction when synthesis is performed in the manufacturing process.

Li, Ni, one or two chemical elements selected from Mn and Co, one, two, or more chemical elements selected from the group consisting of Mg, Al, Ti, Cr, and Fe, and one, two, or more chemical elements selected from the group consisting of B, C, Na, Si, P, S, K, Ca, and Ba are mixed into the raw material to be used in manufacturing of a complex oxide, which is a positive electrode material according to the present invention, and the mixture is baked.
With this method, it is possible to manufacture a positive electrode material for a lithium secondary battery.

There is no particular limitation on what method is used for synthesizing the complex oxide according to the present invention, and examples of the method include a solid-phase reaction method, one in which precipitates from a solution is baked, a spray combustion method, a molten salt method, and so forth.

As an example, a complex oxide can be synthesized by mixing a lithium source, a nickel source, and the like at respective rates in accordance with the chemical composition of the target lithium-nickel complex oxide, by appropriately selecting a temperature at which baking is performed in accordance with the kind of the complex oxide to be formed, and by baking the mixture in an atmosphere consisting of one, two, or more gasses selected from the group consisting of oxygen, nitrogen, argon, and helium at a temperature of about 700°C to 950°C. It is also preferable that the baking described above be a baking process which is performed in a manner such that the mixture is sequentially subjected to a pre-baking stage in which the mixture is held at a temperature of 300 to 500°C for 2 to 6 hours in an oxygen atmosphere, a heating stage in which the pre-baked mixture is heated at a heating rate of 5 to 30°C/min after the pre-baking has been performed, and, subsequently to the heating stage, a final baking stage in which the heated mixture is held at a temperature of 700 to 950°C for 2 to 30 hours and that the baked complex oxide be subjected processing using a water-washing process in which the baked complex oxide is mixed with water and stirred, a dewatering process, and a drying process in order to manufacture a complex oxide.

Since Ni-containing positive electrode material is tends to absorb water, the material is not usually washed using water. However, in the case where unreacted Li is removed in the water-washing process included in the process described above, it is possible to inhibit the occurrence of gelatification of a slurry for a positive electrode and to inhibit the occurrence of the swelling of the battery.

As Ni source, a Co source and a Mn source, for example, oxides, hydroxides and nitrates of the respective chemical elements can be used. Since uniform mixing is important in the case where Ni, Co, and Mn are added, it is particularly preferable that, for example, Ni-Co-$(OH)_2$, Ni-Mn-$(OH)_2$, and Ni-Co-Mn-$(OH)_2$ which are manufactured using a wet synthesis method be used as raw materials. The amounts of Ni-Co-$(OH)_2$, Ni-Mn-$(OH)_2$, and Ni-Co-Mn-$(OH)_2$ are adjusted so that the mole ratio of the amount of Co and Mn to the total amount of Ni, Co, and Mn is 0.05 to 0.60. In manufacturing these materials, it is desirable that dense powdery materials in the form of secondary particles of Ni-Co-$(OH)_2$, Ni-Mn-$(OH)_2$, and Ni-Co-Mn-$(OH)_2$ be manufactured using, for example, a wet synthesis method so that the average particle diameter is controlled to be 5 to 20 $\mu$m and the tapped density is controlled to be 1.8 g/cc or more.

As Li source, for example, hydroxides, nitrates, and carbonates are preferable. As compounds of one or more chemical elements selected from among Mg, Al, Ti, Cr, and Fe, which are N elements, and from among B, C, Na, Si, P, S, K, Ca, and Ba, which are L elements, for example, the oxides, hydroxides, carbonates, nitrates and organic acid salts of the respective chemical elements can be used.

It is preferable that a complex oxide be manufactured by baking after mixing Li compounds, a hydroxide which is formed by co-precipitating Ni, and M elements (one or two chemical elements selected from Mn and Co) and one, two, or more chemical compounds selected from among the oxides, nitrates, sulfates, carbonates, acetates, and phosphates as raw materials containing other constituent chemical elements.

Also, it is preferable that a complex oxide be manufactured by baking after mixing a hydroxide which is formed by co-precipitating N elements (one, two, or more chemical elements selected from the group consisting of Mg, Al, Ti, Cr, and Fe) or L elements (one, two, or more chemical elements selected from the group consisting of B, C, Na, Si, P, S, K, Ca, and Ba) and one, two, or more chemical compounds selected from among the oxides, nitrates, sulfates, carbonates, acetates, and phosphates as raw materials containing other constituent chemical elements.

[Lithium secondary battery]

A positive electrode for a lithium secondary battery which is manufactured using the positive electrode material according to the present invention may be manufactured using an ordinary method. For example, a combined agent for a positive electrode is formed by mixing a carbon-based electrical conducting material such as acetylene black, graphite, and Ketjen black and binder into the powder of the positive electrode material according to the present invention. As the binder, for example, polyvinylidene fluoride, polytetrafluoroethylene, polyamide, carboxymethylcellulose, and acrylic resin can be used.

A positive electrode material layer is formed on a positive electrode current collector by coating slurry, which is formed by dispersing the combined agent for a positive electrode described above in a dispersion medium such as N-methylpyrrolidone, onto the positive electrode current collector composed of, for example, aluminum foil, by performing drying and press rolling.

For a lithium secondary battery in which the positive electrode material according to the present invention is used for the positive electrode, it is preferable that one or more of lithium salts having an anion such as $ClO_4$-, $CF_3SO_3$-, $BF_4$-, $PF_6$-, $AsF_6$-, $SbF_6$-, $CF_3CO_2$- and $(CF_3SO_2)_2$N- be used as solutes of an electrolyte solution. Both cyclic carbonate and chain carbonate may be used. Examples of a cyclic carbonate include propylene carbonate and ethylene carbonate (EC). Examples of a chain carbonate include, dimethyl carbonate, diethyl carbonate (DEC), ethyl methyl carbonate, methyl propyl carbonate, and methyl isopropyl carbonate.

For a separator, for example, a porous polyethylene and a porous polypropylene film may be used.

The negative electrode material of a lithium battery in which the positive electrode material according to the present invention is used for the positive electrode is a material which is capable of occluding and releasing lithium ions. Although there is no particular limitation on what kinds of materials are used to form a negative electrode material, examples of such materials include lithium metal, lithium alloys, carbon materials, carbon compounds, silicon carbide compound, silicon oxide compound, titanium sulfide, boron carbide compound, and oxides including mainly metals in 14 and 15 groups in the periodic table.

There is no particular limitation on the form of a lithium secondary battery in which the positive electrode material according to the present invention is used.

The battery is selected depending on its use from among batteries such as a cylinder type battery using an outer can having a cylinder form (circular cylinder form or square cylinder form), a flat type battery using an outer can having a flat form (flat form having a circular form or a square form in a plan view), and soft package type battery using a laminate film as an outer package.

EXAMPLES

(Example 1)

Ni-Co-$(OH)_2$ was prepared using a wet solution synthesis method by controlling the mole ratios of Ni and Co in order to obtain a raw material as a Ni and Co source.
Commercially available reagents were used as other starting materials. Li hydrate was used as a Li source, $Al_2O_3$ was used as an Al source, and $Ba(NO_3)_2$ was used as a Ba source.

By weighing these starting raw materials in order to obtain the target compound composition, and by sufficiently mixing the weighed materials, a baking raw material was obtained. Baking was performed in an oxygen atmosphere, by first holding the material at a temperature of 400°C for 4 hours mainly in order to remove water in the raw material, by thereafter heating the material at a heating rate of 5°C/min, by holding the heated material at a baking temperature of 800°C for a holding duration of 4 hours, and by taking out the baked material from the furnace after cooling. The baked material taken out was crushed in order to obtain the powder of the positive electrode material. The obtained powder was mixed with water and stirred, dewatered and dried. Evaluation and determination such as particle size distribution determination, chemical composition analysis, and so forth were performed under the conditions described below. The evaluation results are given in Table 1. The symbol "-" in the table indicates a case where the corresponding item was not performed and not determined.

(Reference Examples 2, 6 to 10, 13, 14, 16, 18, 20 and 21 and examples 3 to 5, 11, 12, 15, 17, 19 and 22, and comparative examples 1 to 9)

The same raw materials as used for example 1 were used as a Ni source, a Co source, a Li source, an Al source, and a Ba source. Here, Ni-Co-Mn-$(OH)_2$ was prepared using a wet solution synthesis method by controlling the mole ratios of Ni, Co, and Mn in order to obtain a raw material as a Mn source used for examples 11, 12, and 22, reference example 13 and comparative example 7. In addition, Ni-$(OH)_2$ was used as a Ni source for comparative example 5, and Ni-Mn-$(OH)_2$ was prepared using a
wet solution synthesis method by controlling the mole ratios of Ni and Mn in order to obtain a raw material as a Ni and Mn source used for comparative example 6. Commercially available reagents were used as other starting materials. Sulfur powder was used as a S source, carbon black was used as a C source, $SiO_2$ was used as a Si source, $KNO_3$ was used as a K source, $Mn_3O_4$ was used as a Mn source, MgO was used as a Mg source, $TiO_2$ was used as a Ti source, $Fe_2O_3$ was used as an Fe source, $P_2O_5$ was used as a P source, $Ca(NO_3)_2 \cdot 4H_2O$ was used as a Ca source, $Cr_2O_3$ was used as a Cr source, $NaNO_3$ was used as a Na source, and $H_3BO_3$ was used as a B source. The powder of a positive electrode material was manufactured by performing processing using the baking process and the water-washing process under the same conditions as used for example 1 while the compound composition was varied. In addition, evaluation was performed under the same conditions as used for example 1, and the results are given in Table 1. Here, a water-washing process was not used for reference example 13, example 22, and comparative example 9.

Subsequently, using these powders, the positive electrodes of lithium secondary batteries were manufactured, the battery performance of the batteries was evaluated as described below, and the results are given in Table 1.

By adding N-methyl-2-pyrrolidone to a mixture of 90 mass% of the powder of the positive electrode material for a lithium secondary battery of an example or a comparative example, 5 mass% of acetylene black, and 5 mass% of polyvinylidene fluoride, by sufficiently kneading the mixture, by applying the kneaded mixture to a current collector composed of aluminum so as to form a film having a thickness of about 150 μm, by pressing the film with a pressure of about 200 kg/cm², by punching the coated current collector into a disc having a diameter of 14 mm, and by drying the disc at a temperature of 150°C for 15 hours in vacuum, a positive electrode was obtained. A lithium metal sheet was used as a negative electrode, and a porous polypropylene film (marketed under the trade name of Celgard #2400) was used as a separator. In addition, 1 mole of $LiClO_4$ was dissolved in 1 L of a liquid mixture containing ethylene carbonate (EC) and dimethyl carbonate (DMC) at a volume ratio of 1:1 in order to obtain a non-aqueous electrolyte solution.

Using a testing cell which had been formed by assembling these members in a glove box filled with argon gas, the first discharge capacity was determined by performing charge and discharge within a voltage range of 2.75 to 4.25 V with a constant current density of 0.5 mA/cm². In addition, the first charge-discharge efficiency was calculated using the following equation.

$$\text{first charge-discharge efficiency} = [(\text{first discharge capacity})/(\text{first charge capacity})] \times 100$$

By further performing charge-discharge measurement within a range of 2.75 to 4.25 V with a constant current density of 2.0 mA/cm², the rate performance was determined by calculation using the following equation.

$$\text{rate performance (\%)} = [(\text{discharge capacity for 2.0 mA/cm}^2)/(\text{discharge capacity for 0.5 mA/cm}^2)] \times 100$$

<Evaluation method>

(1) Powder properties

1) Average particle diameter of primary particles: The particle diameters are determined by observing the obtained positive electrode material using an electron microscope.
2) Particle size distribution of secondary particles

The particle size distribution in the whole particle size range is obtained using a laser diffraction-scattering-type measuring apparatus. "$D_{10}$, $D_{90}$" respectively refer to particle diameters corresponding to the integrated values of 10% and 90% in a particle size distribution based on number of particles.

3) Press density

A certain amount of the sample is charged into a mold having a diameter of 20 mm, and compressed with a pressure of 95.5 MPa, and then the press density is calculated from the measured height and mass of the sample.

A tapped density indicates how well powder is naturally compacted without pressure when the powder is composed of the mixture of particles respectively having large diameters and small diameters. A press density indicates how well powder is compacted under pressure when the powder is composed of the mixture of particles respectively having large diameters and small diameters.

(2) Chemical composition

By performing quantitative composition analysis for the obtained powder, the mole ratio of each constituent chemical element with respect to Ni content + M content + N content = 1 mole was determined, and the overall composition of the sample is given in Table 1.

(3) Increase in mass

A certain amount of the obtained positive electrode material is charged into a sample bottle, then the sample bottle is kept in a constant temperature and humidity tank with atmospheric air having a temperature of $25 \pm 3°C$ and a humidity of $60 \pm 5\%$, and 240 hours later, an increasing rate of mass is determined. The average value of the determined values of plural samples is defined as the rate of increase in mass.

(4) Nail penetration test

A cell for a nail penetration test was prepared using the following method. By adding N-methyl-2-pyrrolidone to a mixture of 89 mass% of the powder of the synthesized positive electrode material for a lithium secondary battery, 6 mass% of acetylene black, and 5 mass% of polyvinylidene fluoride, by sufficiently kneading the mixture, by applying the kneaded mixture to a current collector composed of aluminum having a thickness of 20 $\mu$m, and by performing drying and pressing, the positive electrode was manufactured. The negative electrode was manufactured by adding N-methyl-2-pyrrolidone to a mixture of 92 mass% of carbon black, 3 mass% of acetylene black, and 5 mass% of polyvinylidene fluoride, by sufficiently kneading the mixture, by applying the kneaded mixture to a current collector composed of copper having a thickness of 14 $\mu$m, and by performing drying and pressing. The thicknesses of the positive electrode and the negative electrode were respectively 75 $\mu$m and 100 $\mu$m. The electrolyte solution was prepared by dissolving 1 mole of $LiPF_6$ in 1 L of a liquid mixture containing ethylene carbonate (EC) and methyl ethyl carbonate (MEC) at a volume ratio of 1:1. The separator was composed of a porous polypropylene film. Using an aluminum laminate sheet, a square type battery having a length of 60 mm, a width of 35 mm, and a thickness of 4 mm was manufactured. By performing charge to 4.2 V with a current of 160 mA, and by performing discharge to 3.0 V with the same current, the determined discharge capacity was 800 mA.

After having charged a battery with a constant voltage for 8 hours, a nail having a diameter of 2.5 mm was penetrated through the central part of the battery, and then the state of the battery was observed. A case where ignition was not recognized was judged as satisfactory, and a case where ignition was recognized was judged as unsatisfactory.

[Table 1]

| | No. | Overall Composition | Secondary Particle size distribution | Press Density | Rate of Increase in Mass | First Discharge Capacity | First Charge-Discharge Efficiency | Rate Performance | Nail Penetration Test |
|---|---|---|---|---|---|---|---|---|---|
| | | | $(D_{90}-D_{10})$ μm | g/cc | % | mAh/g | % | % | |
| | 1 | Li1.03 Ni0.79 Co0.19 Al0.02 Ba0.003 O2 | 13.47 | 3.43 | 0.44 | 185 | 91.0 | 86.3 | Satisfactory |
| | 2* | Li0.88 Ni0.72 Co0.26 Al0.02 Ba0.003 S0.005 C0.001 O2 | - | 3.41 | 0.44 | 173 | 87.0 | 87.5 | - |
| | 3 | Li1.01 Ni0.79 Co0.18 Al0.03 Ba0.007 Si0.003 O2 | 18.26 | 3.53 | 0.49 | 180 | 89.0 | 86.2 | - |
| | 4 | Li1.12 Ni0.79 Co0.18 Al0.03 Ba0.003 K0.005 O2 | 12.81 | 3.56 | 0.43 | 182 | 88.8 | 87.7 | - |
| | 5 | Li1.03 Ni0.92 Co0.05 Mn0.01 Al0.01 Mg0.01 Ba0.003 O2 | 11.34 | 3.46 | 0.40 | 193 | 91.1 | 85.0 | Satisfactory |
| | 6* | Li1.07 Ni0.83 Co0.09 Mn0.04 Al0.01 Mg0.03 Ba0.003 S0.003 O2 | - | 3.45 | 0.39 | 183 | 90.0 | 85.1 | - |
| | 7* | Li1.02 Ni0.90 Co0.05 Mn0.02 Al0.02 Mg0.01 Ba0.003 C0.003 O2 | - | 3.46 | 0.39 | 191 | 90.3 | 85.4 | - |
| | 8* | Li1.05 Ni0.85 Co0.09 Mn0.01 Al0.01 Mg0.01 Ti0.03 Ba0.003 O2 | - | 3.47 | 0.52 | 190 | 91.2 | 90.5 | - |
| | 9* | Li1.03 Ni0.87 Co0.10 Mn0.01 Al0.01 Mg0.01 Ba0.003 Si0.001 O2 | - | 3.47 | 0.40 | 192 | 90.8 | 86.3 | - |
| | 10* | Li1.00 Ni0.86 Co0.10 Mn0.01 Al0.02 Mg0.01 Ba0.003 P0.003 O2 | - | 3.45 | 0.45 | 192 | 90.5 | 87.0 | - |
| Example | 11 | Li1.03 Ni0.69 Co0.15 Mn0.15 Al0.01 B0.0008 O2 | 13.11 | 3.41 | 0.31 | 176 | 90.3 | 88.7 | Satisfactory |

| No . | Overall Composition | Secondary Particle size distribution | Press Density | Rate of Increase in Mass | First Discharge Capacity | First Charge-Discharge Efficiency | Rate Performance | Nail Penetration Test |
|---|---|---|---|---|---|---|---|---|
| | | $(D_{90}-D_{10})$ μm | g/cc | % | mAh/g | % | % | |
| 12 | Li1.02 Ni0.67 Co0.14 Mn0.14 Al0.05 Ba0.003 S0.003 O2 | 12.53 | 3.40 | 0.28 | 172 | 89.5 | 87.3 | - |
| 13* | Li1.03 Ni0.37 Co0.29 Mn0.30 Al0.04 Ba0.003 Si0.007 O2 | - | 3.36 | 0.43 | 148 | 86.7 | 88.5 | - |
| 14* | Li1.00 Ni0.81 Co0.09 Mn0.08 Al0.02 Ba0.005 O2 | - | 3.46 | 0.50 | 183 | 88.7 | 87.6 | Satisfactory |
| 15 | Li1.04 Ni0.81 Co0.09 Mn0.09 Al0.01 Ba0.003 S0.003 C0.002 O2 | 6.58 | 3.40 | 0.43 | 181 | 88.6 | 88.0 | - |
| 16* | Li1.03 Ni0.82 Co0.09 Mn0.01 Al0.02 Ba0.003 Ca0.003 O2 | - | 3.45 | 0.49 | 184 | 90.1 | 88.8 | - |
| 17 | Li1.00 Ni0.79 Co0.09 Mn0.09 Al0.03 Ba0.003 K0.005 O2 | 11.59 | 3.46 | 0.45 | 180 | 87.4 | 88.1 | - |
| 18* | Li1.03 Ni0.90 Co0.05 Al0.03 Mg0.02 Ba0.003 S0.003 O2 | - | 3.49 | 0.45 | 189 | 89.9 | 86.3 | - |
| 19 | Li0.98 Ni0.85 Co0.09 Mn0.03 Al0.03 Ba0.003 S0.003 C0.002 O2 | 88.8 | 3.41 | 0.44 | 182 | 87.5 | 87.8 | - |
| 20* | Li1.00 Ni0.82 Co0.09 Mn0.01 Al0.08 S0.001 C0.006 O2 | 15.62 | 3.35 | 0.51 | 172 | 86.8 | 89.4 | - |
| 21* | Li1.04 Ni0.82 Co0.09 Mn0.03 Mg0.05 Cr0.01 Na0.003 C0.003 O2 | - | 3.42 | 0.58 | 176 | 88.2 | 84.0 | - |
| 22 | Li1.17 Ni0.41 Co0.25 Mn0.33 Fe0.01 Ba0.004 B0.003 O2 | 13.25 | 3.45 | 0.42 | 151 | 91.2 | 82.5 | - |

EP 2 937 917 B1

11

(continued)

| | No. | Overall Composition | Secondary Particle size distribution (D$_{90}$-D$_{10}$) μm | Press Density g/cc | Rate of Increase in Mass % | First Discharge Capacity mAh/g | First Charge-Discharge Efficiency % | Rate Performance % | Nail Penetration Test |
|---|---|---|---|---|---|---|---|---|---|
| | 1 | Li1.03 Ni0.79 Co0.19 Al0.02 02 | - | 3.22 | 0.78 | 189 | 90.0 | 80.3 | Unsatistactory |
| | 2 | Li1.03 Ni0.81 Co0.19 02 | 14.22 | 3.31 | 0.71 | 195 | 95.0 | 76.2 | Unsatisfactory |
| | 3 | Li0.75 Ni0.85 Co0.10 Al0.05 K0.003 02 | 4.55 | 3.19 | 1.11 | 139 | 72.2 | 63.8 | Unsatisfactory |
| | 4 | Li0.78 Ni0.19 Co0.19 Al0.02 Ba0.003 O2 | 4.29 | 3.30 | 1.08 | 145 | 76.0 | 57.8 | - |
| Comparative Example | 5 | Li1.10 Ni0.82 Mn0.02 Mg0.15 Ti0.01 S0.003 O2 | 10.01 | 3.56 | 0.78 | 139 | 79.0 | 82.6 | Satisfactory |
| | 6 | Li1.12 Ni0.30 Mn0.66 Al0.03 Ti0.01 Ba0.003 K0.003 O2 | 12.57 | 3.16 | 0.18 | 128 | 82.5 | 92.2 | Satisfactory |
| | 7 | Li1.02 Ni0.15 Co0.65 Mn0.17 Al0.01 Ti0.01 Fe0.01 Na0.003 O2 | 9.45 | 3.45 | 0.22 | 129 | 88.0 | 91.6 | - |
| | 8 | Li1.03 Ni0.89 Co0.05 Mn0.03 Al0.02 Mg0.01 02 | 9.45 | 3.27 | 0.77 | 189 | 90.8 | 85.1 | Unsatisfactory |
| | 9 | Li1.03 Ni0.79 Co0.19 Al0.02 Ba0.003 O2 | 3.98 | 3.24 | 2.33 | 168 | 73.1 | 68.0 | Satisfactory |
| | 10 | Li1.02 Ni0.78 Co0.19 Al0.03 Ba0.015 O2 | 8.56 | 3.35 | 0.50 | 125 | 78.7 | 72.2 | - |

* Reference Example

<Description of examples and comparative examples>

In the case of example 1 according to the present invention, where Al, which is an N element, and Ba, which is an L element, were added to the Li-Ni-Co-O-based material for comparative example 2, although there was a little decrease in first discharge capacity and first charge-discharge efficiency, there was an increase in rate performance and press density, there was a decrease in the rate of increase in mass, and a satisfactory result was obtained in a nail penetrating test, which means that example 1 was an excellent positive electrode material having well-balanced properties. Moreover, in the case of example 5 where Mn, which is an M element, and Mg, which is an N element, were added, there was further increase in each of the properties.

In the case of comparative examples 1, 2, and 8 where an L element was not added, and in the case of comparative example 9 where water-washing was omitted, since the rate of increase in mass was much larger than in the case of examples where an L element, which is effective for decreasing the rate of increase in mass, was added, there is concern that the slurry may become gelled in the manufacturing process of a positive electrode and that batteries may become swollen in the case where comparative example 1 and reference examples 2, 8, and 9 are used for positive electrodes.

When comparing the measurement results of the press density for examples 1, 3, 4, 5, and 17 having a value for $D_{90}$-$D_{10}$, which is a particle size distribution based on number of particles, of 5.0 $\mu$m or more with the results for comparative examples 3, 4, and 9 having a value for $D_{90}$-$D_{10}$ less than 5.0 $\mu$m, the differences are significant, and it is difficult to increase capacity per unit volume even if discharge capacity per unit mass is high in the case of the comparative examples, while it can be said that examples 1, 3, 4, 5, and 17 are excellent in terms of capacity.

Since the complex oxides of comparative examples 1, 2, and 8, which are positive electrode materials not containing an L element, had low thermal stability and were unsatisfactory in a nail penetrating test, there is a problem with the safety of a battery.

Examples 1, 3, 11, and 22 and reference example 20 had sufficiently wide secondary particle size distribution. Examples 3 and 4 and reference examples 8, 9 and 18 had high press density. Reference examples 6, 7, and 13 and examples 11 and 12 had a small rate of increase in mass. Example 5 and reference examples 7 through 10 had high first discharge capacity. Examples 1, 5, 11, and 22 and reference examples 6 through 10 and 16 had high first charge-discharge efficiency. Reference examples 8, 13, 16, and 20 and examples 11, 15, and 17 had high rate performance.

Industrial Applicability

A positive electrode for which the positive electrode material for a lithium secondary battery according to the present invention is used has high safety, high capacity, excellent rate performance, and a low rate of increase in mass in a certain atmosphere. A lithium secondary battery for which such a positive electrode is used can widely be used as a power supply that is small and light and has a high energy density for information-related devices, communication devices, and vehicles. A secondary battery which is manufactured using a positive electrode material for a lithium secondary battery according to the present invention can be equally applied to a cylinder type battery using an outer can having a cylinder form (circular cylinder form or square cylinder form), a flat type battery using an outer can having a flat form (flat form having a circular form or a square form in a plan view), and soft package type battery using a laminate film as an outer package.

**Claims**

1. A positive electrode material for a lithium secondary battery, the material being a complex oxide whose overall composition is expressed by $Li_aNi_bM_cN_dL_eO_x$, where

   M: one or two chemical elements selected from Mn and Co, N: one, two, or more chemical elements selected from the group consisting of Mg, Al, Ti, Cr, and Fe,
   L: one, two, or more chemical elements selected from the group consisting of B, C, Na, Si, P, S, K, Ca, and Ba, and where

   a/(b+c+d): 0.80 to 1.30,
   b/(b+c+d): 0.30 to 0.95,
   c/(b+c+d): 0.05 to 0.60,
   d/(b+c+d): 0.005 to 0.10,
   e/(b+c+d): 0.0005 to 0.010,

b+c+d=1, and
x: 1.5 to 2.5,

wherein the amounts of L elements added to form the complex oxide are smaller than that of the added N elements, the difference between $D_{90}$ and $D_{10}$ based on the number of particles is 5.0 $\mu$m or more in the particle size distribution of the secondary particles of the complex oxide, and
the material has a density of 3.40 to 4.50 g/cm$^3$ in the compacted state with a load of 95.5 MPa.

2. The positive electrode material for a lithium secondary battery according to Claim 1, wherein primary particles of the complex oxides having an average particle diameter of 0.1 $\mu$m or more are aggregated to form secondary particles.

3. A method for manufacturing the positive electrode material for a lithium secondary battery according to Claim 1, the method comprising mixing raw material chemical elements or compounds containing raw material chemical elements, baking the resultant raw materials at a temperature of 700°C or higher and 950°C or lower in a baking process, and thereafter performing a treatment using a water-washing process.

4. A lithium secondary battery, the battery comprising a positive electrode composed of a positive electrode material containing a positive electrode material for a lithium secondary battery according to Claim 1 or 2, a negative electrode composed of a negative electrode material, and an ion-conducting medium which is interposed between the positive electrode and the negative electrode and which conducts lithium ions.

5. The positive electrode material for a lithium secondary battery according to Claim 1 or 2, the complex oxides being manufactured by baking after mixing Li compounds, a hydroxide which is formed by co-precipitating Ni and one or more chemical elements selected from Mn and Co and one, two, or more chemical compounds selected from among the oxides, nitrates, sulfates, carbonates, acetates, and phosphates of chemical elements other than the chemical elements described above.

**Patentansprüche**

1. Material einer positiven Elektrode für einen Lithium-Akku, wobei das Material ein komplexes Oxid ist, dessen Gesamtzusammensetzung durch $Li_aNi_bM_cN_dL_eO_x$ ausgedrückt wird, wobei

   M: eines oder zwei chemische Elemente, ausgewählt aus Mn und Co,
   N: eines, zwei oder mehrere chemische Elemente ausgewählt aus der Gruppe bestehend aus Mg, Al, Ti, Cr und Fe,
   L: eines, zwei oder mehrere chemische Elemente ausgewählt aus der Gruppe bestehend aus B, C, Na, Si, P, S, K, Ca und Ba, und wobei

   a/(b+c+d): 0,80 bis 1,30,
   b/(b+c+d): 0,30 bis 0,95,
   c/(b+c+d): 0,05 bis 0,60,
   d/(b+c+d): 0,005 bis 0,10,
   e/(b+c+d): 0,0005 bis 0,010,

   b+c+d=1 und
   x: 1,5 bis 2,5,

   wobei die Mengen der L-Elemente, die zum Bilden des komplexen Oxids hinzugefügt werden, geringer als die der hinzugefügten N-Elemente sind,
   die Differenz zwischen $D_{90}$ und $D_{10}$, basierend auf der Anzahl von Partikeln in der Partikelgrößenverteilung der Sekundärpartikel des komplexen Oxids 5,0 $\mu$m oder mehr beträgt, und
   das Material eine Dichte von 3,40 bis 4,50 g/cm$^3$ in dem kompaktierten Zustand mit einer Last von 95,5 MPa aufweist.

2. Material einer positiven Elektrode für einen Lithium-Akku gemäß Anspruch 1, wobei Primärpartikel der komplexen Oxide, die einen durchschnittlichen Partikeldurchmesser von 0,1 $\mu$m oder mehr aufweisen, aggregiert sind, um Sekundärpartikel zu bilden.

3. Verfahren zur Herstellung des Materials einer positiven Elektrode für einen Lithium-Akku gemäß Anspruch 1, wobei das Verfahren das Mischen von chemischen Elementen als Ausgangsstoff oder Verbindungen, die chemische Elemente als Ausgangsstoff beinhalten, das Brennen der resultierenden Ausgangsstoffe bei einer Temperatur von 700°C oder höher und 950°C oder niedriger in einem Brennprozess, und anschließend das Durchführen einer Behandlung unter Verwendung eines Wasserwaschprozesses umfasst.

4. Lithium-Akku, wobei der Akku eine positive Elektrode, die aus einem Material einer positiven Elektrode zusammengesetzt ist, das Material einer positiven Elektrode gemäß Anspruch 1 oder 2 enthält, eine negative Elektrode, die aus einem Material einer negativen Elektrode zusammengesetzt ist, und ein ionenleitendes Medium, das zwischen der positiven Elektrode und der negativen Elektrode eingefügt ist und welches Lithium-Ionen leitet, umfasst.

5. Material einer positiven Elektrode für einen Lithium-Akku gemäß Anspruch 1 oder 2, wobei die komplexen Oxide nach dem Mischen von Li-Verbindungen durch das Brennen von einem Hydroxid, das durch Kopräzipitation von Ni und einem oder mehreren chemischen Elementen, ausgewählt aus Mn und Co, und einer, zwei oder mehreren chemischen Verbindungen, ausgewählt aus den Oxiden, Nitraten, Sulfaten, Carbonaten, Acetaten und Phosphaten von chemischen Elementen, die nicht die oben beschriebenen chemischen Elemente sind, gebildet wird, hergestellt werden.

**Revendications**

1. Matériau d'électrode positive pour une batterie rechargeable au lithium, le matériau étant un oxyde complexe dont la composition globale est exprimée par $Li_aNi_bM_cN_dL_eO_x$, où

   M représente un ou deux éléments chimiques sélectionnés parmi Mn et Co,
   N représente un, deux éléments chimiques ou plus sélectionnés dans le groupe constitué de Mg, Al, Ti, Cr et Fe,
   L représente un, deux éléments chimiques ou plus sélectionnés dans le groupe constitué de B, C, Na, Si, P, S, K, Ca et Ba, et où

   $a/(b + c + d)$ varie de 0,80 à 1,30,
   $b/(b + c + d)$ varie de 0,30 à 0,95,
   $c/(b + c + d)$ varie de 0,05 à 0,60,
   $d/(b + c + d)$ varie de 0,005 à 0,10,
   $e/(b + c + d)$ varie de 0,0005 à 0,010,

   $b + c + d = 1$ ; et
   x varie de 1,5 à 2,5,

   dans lequel les quantités de L éléments ajoutés pour former l'oxyde complexe sont inférieures à celles des N éléments ajoutés,
   la différence entre $D_{90}$ et $D_{10}$ basée sur le nombre de particules est de 5,0 $\mu$m ou plus dans la répartition de tailles de particules des particules secondaires de l'oxyde complexe, et
   le matériau a une densité de 3,40 à 4,50 g/cm$^3$ dans l'état compacté avec une charge de 95,5 MPa.

2. Matériau d'électrode positive pour une batterie rechargeable au lithium selon la revendication 1, dans lequel les particules principales des oxydes complexes ayant un diamètre de particule moyen de 0,1 $\mu$m ou plus sont agrégées pour former des particules secondaires.

3. Procédé de fabrication du matériau d'électrode positive pour une batterie secondaire au lithium selon la revendication 1, le procédé comprenant le mélange d'éléments chimiques matières premières ou de composés contenant des éléments chimiques matières premières, la cuisson des matières premières résultantes à une température de 700 °C ou plus et 950 °C ou moins dans un processus de cuisson, et la réalisation par la suite d'un traitement au moyen d'un processus de lavage à l'eau.

4. Batterie rechargeable au lithium, la batterie comprenant une électrode positive composée d'un matériau d'électrode positive contenant un matériau d'électrode positive pour une batterie rechargeable au lithium selon la revendication 1 ou 2, une électrode négative composée d'un matériau d'électrode négative, et un milieu conducteur d'ions qui est intercalé entre l'électrode positive et l'électrode négative et qui conduit les ions lithium.

**5.** Matériau d'électrode positive pour une batterie rechargeable au lithium selon la revendication 1 ou 2, les oxydes complexes étant fabriqués par cuisson après mélange de composés Li, d'un hydroxyde qui est formé par co-précipitation de Ni et d'un ou plusieurs éléments chimiques sélectionnés parmi Mn et Co et d'un, de deux composés chimiques ou plus choisis parmi les oxydes, nitrates, sulfates, carbonates, acétates et phosphates d'éléments chimiques autres que les éléments chimiques indiqués plus haut.

**EP 2 937 917 B1**

**REFERENCES CITED IN THE DESCRIPTION**

**Patent documents cited in the description**

- JP 2007517368 W
- JP 2012174569 A